# FASCICULE DE BREVET EUROPEEN

(11) **EP 2 727 057 B1**
(45) Date de publication et mention de la délivrance du brevet: **24.04.2019**
(21) Numéro de dépôt: 12734969.4
(22) Date de dépôt: 19.06.2012
(51) Int. Cl.: G06Q 10/08, G06F 9/50, H04L 12/24

(54) **PROCEDE ET PROGRAMME D'ORDINATEUR POUR IDENTIFIER DYNAMIQUEMENT DES COMPOSANTS D'UN CLUSTER ET AUTOMATISER DES OPERATIONS DE GESTION OPTIMISEE DU CLUSTER**
VERFAHREN UND COMPUTERPROGRAMM ZUR DYNAMISCHEN IDENTIFIKATION VON KOMPONENTEN EINES CLUSTERS UND ZUR AUTOMATISIERUNG DES BETRIEBS FÜR OPTIMIERTES MANAGEMENT DES CLUSTERS
METHOD AND COMPUTER PROGRAM FOR DYNAMICALLY IDENTIFYING COMPONENTS OF A CLUSTER AND FOR AUTOMATING OPERATIONS FOR OPTIMIZED MANAGEMENT OF THE CLUSTER

(30) Priorité: 28.06.2011 FR 1155752
(43) Date de publication de la demande: 07.05.2014
(73) Titulaire: Bull SAS, 78340 Les Clayes-sous-Bois (FR)
(72) Inventeur: FICET, Aline, F-91350 Grigny (FR)
(74) Mandataire: Santarelli
(86) Numéro de dépôt international: PCT/FR2012/051373
(87) Numéro de publication internationale: WO 2013/001204

(56) Documents cités:
- US-A1- 2002 165 893
- US-A1- 2008 049 644
- US-A1- 2008 168 459
- SUKHYUN SONG ET AL: "Blue Eyes: Scalable and reliable system management for cloud computing", PARALLEL&DISTRIBUTED PROCESSING, 2009. IPDPS 2009. IEEE INTERNATIONAL SYMPOSIUM ON, IEEE, PISCATAWAY, NJ, USA, 23 mai 2009 (2009-05-23), pages 1-8, XP031487677, ISBN: 978-1-4244-3751-1
- JACOB LIBERMAN ET AL: "Integrating hardware management with cluster administration toolkits", CLUSTER COMPUTING, 2007 IEEE INTERNATIONAL CONFERENCE ON, IEEE, PISCATAWAY, NJ, USA, 17 septembre 2007 (2007-09-17), pages 468-472, XP031324128, ISBN: 978-1-4244-1387-4
- MAOYUAN XIE ET AL: "Cluster abstraction: towards uniform resource description and access in multicluster grid", COMPUTER AND COMPUTATIONAL SCIENCES, 2007. IMSCCS 2007. SECOND INTERNATIONAL MULTI-SYMPOSIUMS ON, IEEE, PISCATAWAY, NJ, USA, 13 août 2007 (2007-08-13), pages 220-227, XP031338403, ISBN: 978-0-7695-3039-0

## Description

La présente invention concerne la gestion de composants dans des clusters et plus particulièrement un procédé et un programme d'ordinateur pour identifier dynamiquement des composants d'un cluster et automatiser des opérations de gestion optimisée du cluster.

Le calcul haute performance, aussi appelé HPC (sigle de *High Performance Computing* en terminologie anglo-saxonne) se développe pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters. Un cluster comprend typiquement un ensemble de noeuds interconnectés. Certains noeuds sont utilisés pour effectuer des tâches de calcul (noeuds de calcul), d'autres pour stocker des données (noeuds de stockage) et un ou plusieurs autres gèrent le cluster (noeuds d'administration). Chaque noeud est par exemple un serveur mettant en oeuvre un système d'exploitation tel que Linux (Linux est une marque). La connexion entre les noeuds est, par exemple, réalisée à l'aide de liens de communication Ethernet ou Infiniband (Ethernet et Infiniband sont des marques).

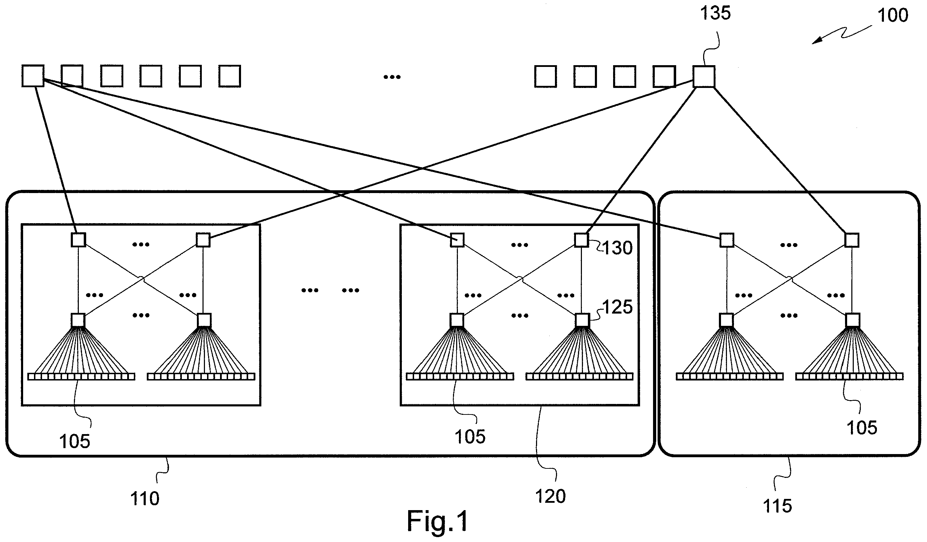

La figure 1 illustre schématiquement un exemple d'une topologie 100 d'un cluster, de type *fat-tree.* Ce dernier comprend un ensemble de noeuds génériquement référencés 105. Les noeuds appartenant à l'ensemble 110 sont ici des noeuds de calcul tandis que les noeuds de l'ensemble 115 sont des noeuds de service (noeuds de stockage et noeuds d'administration). Les noeuds de calcul peuvent être regroupés en sous-ensembles 120 appelés îlots de calcul, l'ensemble 115 étant appelé îlot de service.

Les noeuds sont reliés les uns aux autres par des commutateurs (appelés *switch* en terminologie anglo-saxonne), par exemple de façon hiérarchique. Dans l'exemple illustré sur la figure 1, les noeuds sont connectés à des commutateurs 125 de premier niveau qui sont eux-mêmes reliés à des commutateurs 130 de deuxième niveau qui sont à leur tour reliés à des commutateurs 135 de troisième niveau.

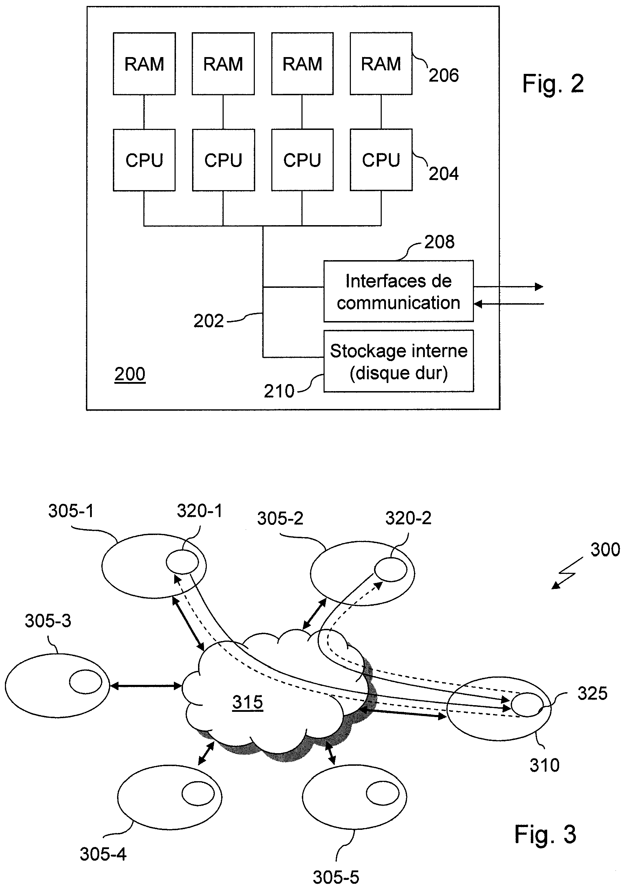

Comme illustré sur la figure 2, chaque noeud comprend généralement un ou plusieurs microprocesseurs, des mémoires locales ainsi qu'une interface de communication. Plus précisément, le noeud 200 comporte ici un bus de communication 202 auquel sont reliés :
- des unités centrales de traitement ou microprocesseurs 204 (ou CPU, sigle de *Central Processing Unit* en terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive est associé à un microprocesseur) ; et,
- des interfaces de communication 208 adaptées à transmettre et à recevoir des données.

Le noeud 200 dispose en outre ici de moyens de stockage interne 210, tels que des disques durs, pouvant notamment comporter le code exécutable de programmes.

Le bus de communication permet la communication et l'interopérabilité entre les différents éléments inclus dans le noeud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Le nombre de composants mis en oeuvre dans un cluster, notamment d'équipements tels que des noeuds et des commutateurs, varie d'un cluster à un autre. Il peut être relativement faible, par exemple quelques dizaines de noeuds, ou très important, par exemple quelques milliers voire dizaines de milliers de noeuds. En outre, les composants mis en oeuvre, d'un même type, peuvent être différents. Ainsi, par exemple, certains noeuds utilisés sont des noeuds comprenant une seule unité de calcul alors que d'autres noeuds en comprennent plusieurs. De même, la taille des mémoires et les versions logicielles ne sont pas nécessairement les mêmes pour chaque noeud.

Pour gérer un cluster efficacement et, notamment, s'assurer de son bon fonctionnement, il est nécessaire de connaître tous les composants matériels et logiciels qu'il comprend. La liste des composants d'un cluster est ainsi souvent définie dans une base de données. Alors qu'elle peut être déterminée de façon théorique à partir des données de conception du cluster, une liste des composants réellement mis en oeuvre est généralement établie pour s'assurer de la conformité du cluster. Un tel inventaire est typiquement réalisé par un opérateur qui va interroger, de façon manuelle ou automatique, chaque composant du cluster pour en déduire la composition du cluster.

Cependant, la complexité croissante des composants des clusters et l'évolution de la taille de ces derniers exigent des moyens d'administration et de gestion de plus en plus performants.

Le document US2008/0049644 divulgue un état de la technique pertinent.

L'invention permet de résoudre au moins un des problèmes exposés précédemment.

L'invention a ainsi pour objet un procédé selon la revendication 1.

Le procédé selon l'invention permet ainsi d'améliorer l'utilisation d'un cluster à partir de la connaissance des composants de ses éléments. L'inventaire de composants étant réalisé à distance, il peut être réalisé automatiquement dans de nombreuses configurations et situations.

Selon un mode de réalisation particulier, le procédé comprend en outre, dans ledit au moins un premier élément, une étape de détection d'un événement, lesdites étapes d'établissement et de transmission dudit au moins un inventaire local étant effectuées en réponse à ladite détection. Il est ainsi possible de mettre à jour un inventaire selon des événements prédéterminés.

Toujours selon un mode de réalisation particulier, le procédé comprend en outre, dans ledit second élément, une étape d'émission d'une requête d'inventaire, ladite étape de détection d'un événement comprenant une détection d'une réception de ladite requête. Il est ainsi possible de mettre à jour un inventaire sur requête d'un noeud d'administration. Une telle requête peut être produite automatiquement ou manuellement.

Alternativement, ledit événement détecté est généré dans ledit au moins un premier élément. Il est ainsi possible de mettre à jour un inventaire selon un événement local, par exemple un redémarrage ou une mise à jour.

De façon avantageuse, le procédé comprend en outre une étape d'identification dudit au moins un composant matériel et/ou logiciel dudit au moins un premier élément, ledit au moins un inventaire local comprenant un identifiant dudit au moins un composant matériel et/ou logiciel dudit au moins un premier élément.

Selon des modes de réalisation particuliers, ladite opération de gestion dudit cluster comprend une optimisation de répartition de charge entre plusieurs composants matériels d'éléments de ladite pluralité d'éléments, une vérification de conformité d'au moins un composant matériel et/ou logiciel d'au moins un élément de ladite pluralité d'éléments et/ou une vérification de mise à jour d'au moins un composant logiciel d'au moins un élément de ladite pluralité d'éléments.

Toujours selon un mode de réalisation particulier, lesdites étapes de réception dudit au moins un inventaire et d'établissement d'un inventaire partiel ou global sont répétées pour tous les éléments de ladite pluralité d'éléments d'un type prédéterminé de telle sorte que l'inventaire partiel ou global soit relatif à une pluralité d'éléments.

Toujours selon un mode de réalisation particulier, au moins un inventaire local d'un élément dudit cluster n'ayant pas de capacité de traitement de données est établi par ledit second élément, au moins une donnée dudit inventaire local dudit élément n'ayant pas de capacité de traitement de données étant utilisée pour l'établissement dudit inventaire partiel ou global. L'inventaire partiel ou global comprend ainsi des caractéristiques d'éléments n'ayant pas de capacité de traitement de données, tels que des commutateurs. Les éléments ayant des capacités de traitement de données sont par exemple des noeuds.

L'invention a également pour objet un programme d'ordinateur comprenant des instructions adaptées à la mise en oeuvre de chacune des étapes du procédé décrit précédemment lorsque ledit programme est exécuté sur un ordinateur. Les avantages procurés par ce programme d'ordinateur sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un noeud d'un cluster ;
- la figure 3 illustre schématiquement un exemple de mise en oeuvre du procédé selon l'invention dans un cluster ;
- la figure 4 illustre schématiquement certaines étapes mises en oeuvre dans un élément d'un cluster, par exemple un noeud, pour effectuer un inventaire local ;
- la figure 5 illustre schématiquement certaines étapes mises en oeuvre dans un module d'inventaire de synthèse ; et
- la figure 6 illustre un exemple d'une séquence d'étapes permettant d'obtenir un inventaire global sous forme de fichier XML.

De façon générale, l'invention permet d'effectuer un inventaire des composants matériels et/ou logiciels d'un cluster ou d'une partie d'un cluster en combinant une détermination locale automatique des composants de certains éléments ayant des capacités de traitement de données (par exemple des équipements de types prédéterminés), ou de tous, et une synthèse globale des composants de l'ensemble de ces éléments afin d'automatiser des opérations de gestion optimisée du cluster.

A ces fins, chaque élément visé (ayant des capacités de traitement de données), par exemple chaque équipement d'un type prédéterminé, typiquement chaque noeud, d'un cluster comprend un module d'inventaire local tandis qu'un élément de gestion, par exemple de noeud de management, comprend un module d'inventaire de synthèse. Selon les besoins, le module d'inventaire de synthèse peut interroger les modules d'inventaire local et les modules d'inventaire local peuvent, de façon automatique, transmettre des informations relatives aux composants de l'élément considéré, par exemple lorsqu'un événement déterminé est identifié dans cet élément.

Les éléments ne disposant pas de capacité de traitement de données, par exemple des commutateurs, peuvent être interrogés par des éléments en disposant, par exemple des noeuds d'administration, qui peuvent alors établir des inventaires locaux susceptibles d'être agrégés avec d'autres inventaires locaux et d'être utilisés pour mettre à jour un ou plusieurs inventaires partiels et/ou global.

La figure 3 illustre schématiquement un exemple de mise en oeuvre du procédé selon l'invention dans un cluster 300.

Comme illustré, le cluster 300 comprend un ensemble d'éléments ayant des capacités de traitement de données, ici les noeuds 305-1 à 305-5 (génériquement référencés 305) et le noeud de management 310, connectés les uns aux autres via le réseau de communication 315 (comprenant ici des liens et des commutateurs, non représentés).

Chaque noeud 305 comprend un module d'inventaire local génériquement référencé 320. Ainsi, par exemple, le noeud 305-1 comprend le module d'inventaire local 320-1 et le noeud 305-2 comprend le module d'inventaire local 320-2. Le noeud de management 310 comprend un module d'inventaire de synthèse 325.

Un inventaire local est réalisé par un module d'inventaire local à l'aide de commandes standard, par exemple de commandes Linux. Ces commandes sont regroupées en séquences, par exemple une séquence de commandes écrite conformément au langage PERL. Ces commandes ont pour objet d'obtenir des informations relatives aux composants matériels et logiciels de l'élément considéré.

Un exemple d'un extrait d'une telle séquence est présenté en annexe (code 1). Les commandes données ici visent l'obtention de données relatives à un connecteur Ethernet d'un noeud. La commande *ethtool* permet d'obtenir ces données qui sont alors traitées pour en extraire le nom et la référence de microcode (*firmware*) ainsi que le type et la version du composant, la version de son microcode et une description du bus. Des commandes équivalentes sont utilisées pour obtenir des informations relatives à d'autres composants (microprocesseurs, barrettes mémoires, disques durs, etc.).

Ces commandes peuvent notamment consister en des interrogations des composants visés ou en l'obtention, typiquement la lecture, de données de configuration de l'élément considéré ou de données de journaux de bord systèmes, c'est-à-dire de données d'exécution telles que celles présentées en annexe (Journal de bord syslog). Cet exemple indique notamment des nombres de mémoires et de microprocesseurs disponibles ainsi que l'information selon laquelle ces nombres ont été correctement transmis.

Les composants matériels d'un noeud sont, par exemple, les unités centrales de traitement ou microprocesseurs 204, les composants de mémoire vive 206, les interfaces de communication 208 et les moyens de stockage interne 212 illustrés sur la figure 2. Les composants logiciels sont typiquement des modules du noyau du système d'exploitation du noeud ainsi que des modules liés à ce noyau.

A titre d'illustration, les caractéristiques obtenues sont les suivantes :
- composants matériels (processeurs, mémoires, etc.) :
   ∘ nom, type, vendeur, modèle, localisation, numéro de série, référence, description et microcode ; et,
   ∘ quantité de chaque composant ;
- composants logiciels (dont le système d'exploitation) :
   ∘ nom, type, version, date d'installation.

Un inventaire local est ici réalisé suite à la détection d'un événement particulier. Un tel événement peut notamment être lié à un changement d'état de l'élément considéré (c'est-à-dire l'élément dans lequel est effectué l'inventaire local), par exemple la détection d'une panne, ou à une commande. Cette dernière peut être générée localement, par exemple une commande de redémarrage (généralement appelée *reboot* en terminologie anglo-saxonne) ou reçue d'un dispositif distant, par exemple une commande d'exécution du module d'inventaire local reçue du module d'inventaire de synthèse du noeud de management comme illustré sur la figure 3 par les flèches en trait pointillé.

Lorsqu'un inventaire local a été établi, il est transmis au module d'inventaire de synthèse du noeud de management, comme illustré sur la figure 3 par les flèches unidirectionnelles en trait continu, pour, le cas échéant, former un inventaire global. L'inventaire global consiste par exemple en la concaténation d'inventaires locaux (pouvant notamment comprendre l'inventaire local du noeud de management). L'inventaire global est typiquement mémorisé dans une base de données accessible par le noeud de management. Il peut également être mémorisé localement par ce dernier.

Les noeuds 305 et 310 peuvent en outre comprendre un module d'inventaire local permettant l'établissement d'inventaires locaux d'éléments ne disposant pas de capacité de traitement de données (non représentés sur la figure 3).

Selon un mode de réalisation particulier, les inventaires locaux ainsi que l'inventaire global sont échangés et/ou stockés sous forme de fichiers au format XML (sigle d'*Extensible Markup Language* en terminologie anglo-saxonne).

A titre d'illustration, un extrait d'un fichier au format XML est présenté en annexe (Extrait de fichier d'inventaire au format XML). Bien que l'exemple donné ici vise plusieurs composants de type différents, il est simplifié, un élément pouvant notamment comprendre plusieurs dizaines ou centaines d'équipements de mêmes types ou de types différents.

Selon cet exemple, l'inventaire local fournit des caractéristiques de l'élément concerné, ici un équipement, par exemple son nom (*nom_1*)*,* son type (*Node*), son vendeur (*vendeur_1*), son modèle (*modele_1*), son adresse IP (sigle d'Internet Protocol en terminologie anglo-saxonne) (*12.18.64.254*), sa fonction (surveillance ou *mngt*), son statut (*up*) ainsi que sa position géographique (référence d'armoire informatique et position dans cette dernière). Il fournit également des caractéristiques sur les composants logiciels installés dans l'élément concerné, notamment leur nom (par exemple *logiciel_1*), leur type (par exemple *install*), leur version (par exemple *1.12*) et leur date d'installation (par exemple *2011-06-07 08:04:45*). L'inventaire local fournit en outre des caractéristiques sur des composants matériels, par exemple des systèmes, microprocesseurs, mémoires vives et disques durs, de l'élément concerné, telles que leur nom (par exemple *bullx*), leur type (par exemple *system*), leur vendeur (par exemple *Bull SAS*), leur modèle (par exemple *modele-1*) et, le cas échéant, leur numéro de série (par exemple *CR-1763578DF485*), une référence (ou *part number* en terminologie anglo-saxonne), une description et des informations relatives au microcode telles qu'un nom (par exemple *BIOS*), une version (par exemple *1.0b, Revision:8.16(08*/*14*/*2009)*) et une description (par exemple *Vendor from American Megatrends Inc.*).

L'inventaire global (ou un ou plusieurs inventaires partiels) peut alors être utilisé pour automatiser des opérations de gestion optimisée du cluster, l'optimisation étant liée à l'inventaire global et/ou à un ou plusieurs inventaires partiels.

Ainsi, par exemple, en connaissant les caractéristiques des noeuds d'un cluster, en termes de disponibilité et de performance, il est possible d'améliorer la répartition de charge en fonction des processus à exécuter. A ces fins, un algorithme standard d'allocation de ressources identifiées peut être utilisé.

Toujours à titre d'illustration, l'inventaire permet de vérifier le bon déroulement de mises à jour de composants logiciels, à l'échelle du cluster, d'un équipement ou plus généralement d'un élément ayant des capacités de traitement de données. De même, l'inventaire permet de vérifier le matériel devant être présent dans un équipement au regard du matériel attendu contractuellement. De telles vérifications peuvent être effectuées en comparant les caractéristiques des composants du cluster, telles que définies dans l'inventaire global et/ou dans un ou plusieurs inventaires locaux avec des données prédéterminées, par exemple des données de configuration du cluster.

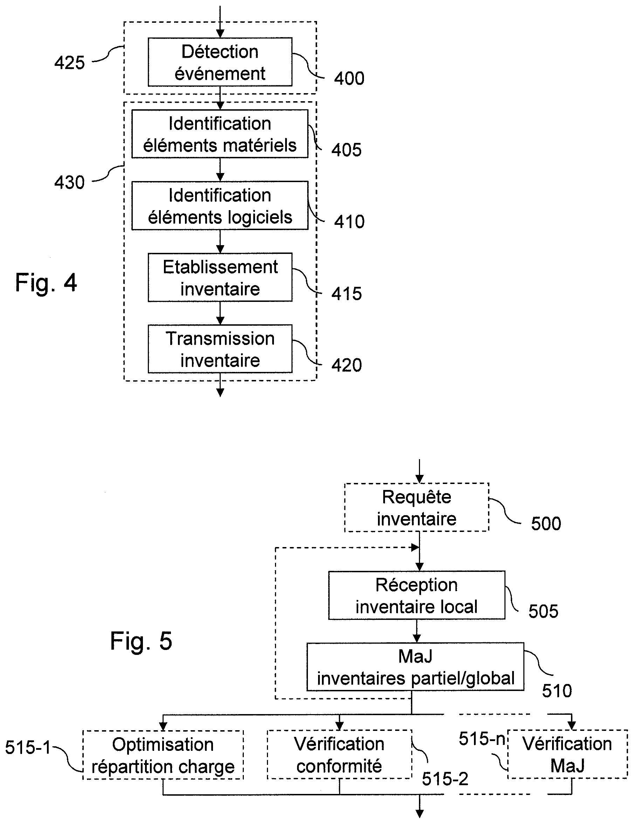

La figure 4 illustre schématiquement certaines étapes mises en oeuvre dans un élément d'un cluster, par exemple un noeud, pour effectuer un inventaire local.

Comme illustré, une première étape (étape 400) a pour objet la détection d'un événement particulier, par exemple un événement appartenant à une liste d'événements prédéterminés. Un tel événement peut notamment être lié à l'élément pour lequel l'inventaire doit être établi ou à un événement extérieur tel qu'une demande d'établissement d'un inventaire local reçue d'un noeud de management.

Dans des étapes suivantes (étapes 405 et 410), des composants matériels et/ou logiciels sont identifiés. Comme indiqué précédemment, ces composants peuvent être identifiés à partir d'interrogations ou de lectures pouvant prendre la forme d'une séquence de commandes, notamment d'une séquence de commandes décrite dans le langage PERL. Des caractéristiques de ces composants, par exemple des références de version et des quantités, sont avantageusement obtenues de façon similaire et associées aux composants identifiés.

Les composants identifiés et les caractéristiques associées obtenues sont alors utilisés pour former un inventaire local, de préférence selon un format prédéterminé, comme décrit précédemment (étape 415), qui est transmis à un module d'inventaire de synthèse pouvant notamment être mis en oeuvre dans un noeud de management (étape 420), pour être agrégé avec d'autres inventaires locaux pour former un inventaire partiel et/ou global.

Typiquement, l'implémentation de l'algorithme décrit en référence à la figure 4 est scindée en deux parties. Une première partie, référencée 425, comprenant l'étape 400, est intrinsèquement liée au système d'exploitation mis en oeuvre dans l'élément considéré (ou en lien avec ce dernier) afin de détecter un événement particulier et, en réponse à cette détection, lancer l'exécution d'un module de construction et de transmission d'un inventaire local. La seconde partie, référencée 430, correspondant au module de construction et de transmission d'un inventaire local, comprend ici les étapes 405 à 420. Comme indiqué précédemment, cette seconde partie utilise par exemple le langage PERL.

La figure 5 illustre schématiquement certaines étapes mises en oeuvre dans un module d'inventaire de synthèse. Comme décrit précédemment, un module d'inventaire de synthèse appartient typiquement à un noeud de management.

Une première étape (étape 500), optionnelle (comme représenté par l'utilisation de traits pointillés), a pour objet l'émission d'une requête d'inventaire. Selon les besoins, une telle requête est adressée à un élément particulier, conformément à un mode de communication appelé *unicast,* à un ensemble d'éléments, par exemple un îlot, conformément à un mode de communication appelé *multicast* ou à tous les éléments conformément à un mode de communication appelé *broadcast.* La requête peut notamment prendre la forme d'un message, sa transmission utilisant un protocole de communication standard

Dans une étape suivante (étape 505), un inventaire local est reçu d'un élément, par exemple d'un noeud, ce dernier pouvant utiliser un algorithme tel que celui décrit en référence à la figure 4.

L'inventaire reçu est alors utilisé pour mettre à jour (étape 510) un ou plusieurs inventaires partiels, par exemple un inventaire lié à un îlot et un inventaire lié à un ensemble d'îlots, et/ou un inventaire global. Une telle étape consiste par exemple à modifier, dans un ou des inventaires partiels et/ou global, les données correspondant aux informations reçues (inventaire local).

Il est observé ici que si le ou les inventaires partiels et ou global n'existent pas, il est ou ils sont créés.

Comme illustré par la flèche en trait pointillé, les étapes 505 et 510 sont avantageusement répétées pour tous les inventaires locaux reçus.

Le ou les inventaires partiels et/ou global peuvent alors être utilisés pour automatiser des opérations de gestion optimisée du cluster, par exemple en optimisant la répartition de la charge (étape 515-1), en vérifiant la conformité du cluster (étape 515-2) et/ou en vérifiant une mise à jour d'un ou de plusieurs éléments du cluster (étape 515-n). Les algorithmes d'optimisation de la répartition de la charge, de vérification de la conformité du cluster et de vérification de mise à jour d'un ou de plusieurs éléments du cluster sont ici des algorithmes standard.

Les algorithmes décrits en référence aux figures 4 et 5 sont mis en oeuvre dans des éléments ayant des capacités de traitement de données, typiquement des équipements tels que des noeuds dont l'architecture est similaire à celle décrite en référence à la figure 2.

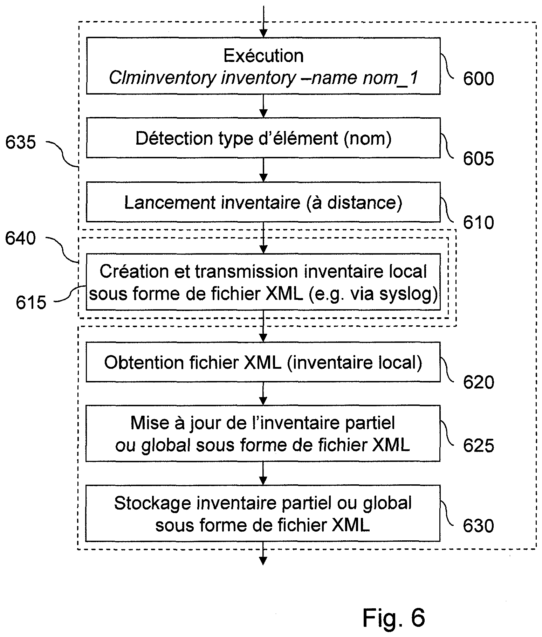

La figure 6 illustre un exemple d'une séquence d'étapes permettant d'obtenir un inventaire global sous forme de fichier XML.

Une première étape (étape 600) vise ici l'exécution de la commande *« clminventory inventory -name nom_1* » ayant pour objet l'exécution de la fonction « *clminventory* » avec comme paramètre le nom « *nom_1* », qui permet l'obtention de l'inventaire local de l'élément dont le nom lui est donné en paramètre.

Dans une étape suivante (étape 605), le type de l'élément dont l'inventaire local doit être établi, c'est-à-dire le type de l'élément ayant pour nom *« nom_1* » est déterminé. Le type de l'élément est déterminé à partir de son nom à l'aide de données de configuration du cluster. Si l'élément considéré n'a pas de capacités de traitement de données, l'inventaire local est établi par un autre élément, de façon classique (non représenté).

Au contraire, si l'élément considéré dispose de capacités de traitement de données, une instruction lui est adressée, par exemple sous forme d'événement dans un message qui lui est transmis, afin qu'en réponse il transmette son inventaire local (étape 610).

L'élément visé, c'est-à-dire l'élément nommé « *nom_1* », crée son inventaire local comme décrit précédemment (étape 615), en utilisant par exemple des données d'exécution (*syslog*). L'inventaire local est ici créé sous forme de fichier XML. Il est ensuite transmis à l'élément à l'origine de la requête, c'est-à-dire l'élément ayant lancé l'inventaire à distance.

Après avoir obtenu le fichier au format XML représentant l'inventaire local (étape 620), le contenu de ce fichier est utilisé pour mettre à jour un inventaire partiel ou global du cluster (étape 625) se présentant également sous forme d'un fichier XML qui est ensuite stocké (étape 630). La mise à jour de l'inventaire partiel ou global peut consister à ajouter des informations manquantes et/ou à modifier des informations préalablement mémorisées.

Les étapes 600 à 610 et 620 à 630 sont ici mises en oeuvre dans un élément 635 duquel il est possible de lancer automatiquement ou manuellement un inventaire d'un élément du cluster auquel il appartient. L'élément 635 est typiquement un noeud d'administration. L'étape 615 est mise en oeuvre dans un élément 640 du cluster ayant des capacités de traitement de données, par exemple un noeud de calcul.

Naturellement, pour satisfaire des besoins spécifiques, une personne compétente dans le domaine de l'invention pourra appliquer des modifications dans la description précédente.

### ANNEXE

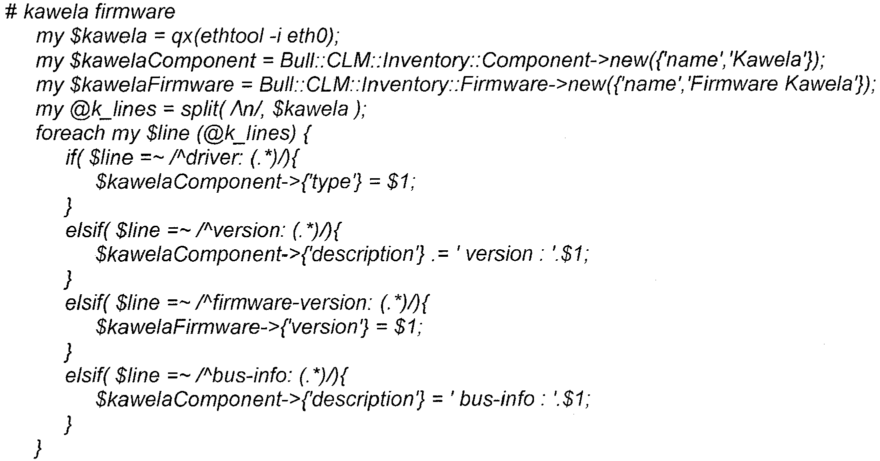

### Code 1

*1308061409 2011 Jun 14 16:23:29 berlin32 local0 info inventory [inventory@clmBull action="cpu_memory" memory_available="36" cpu_available="8" host="nom_1" status="success"] Cpu_available and memory_available successfully sent*

### Journal de bord sysloq

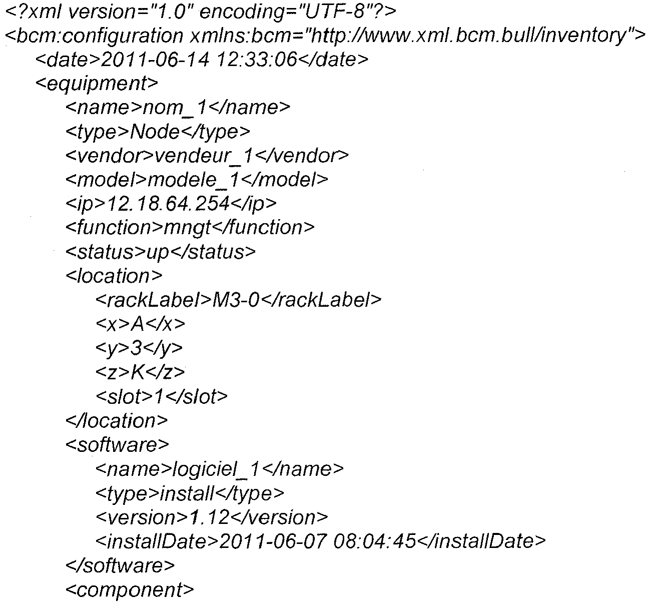

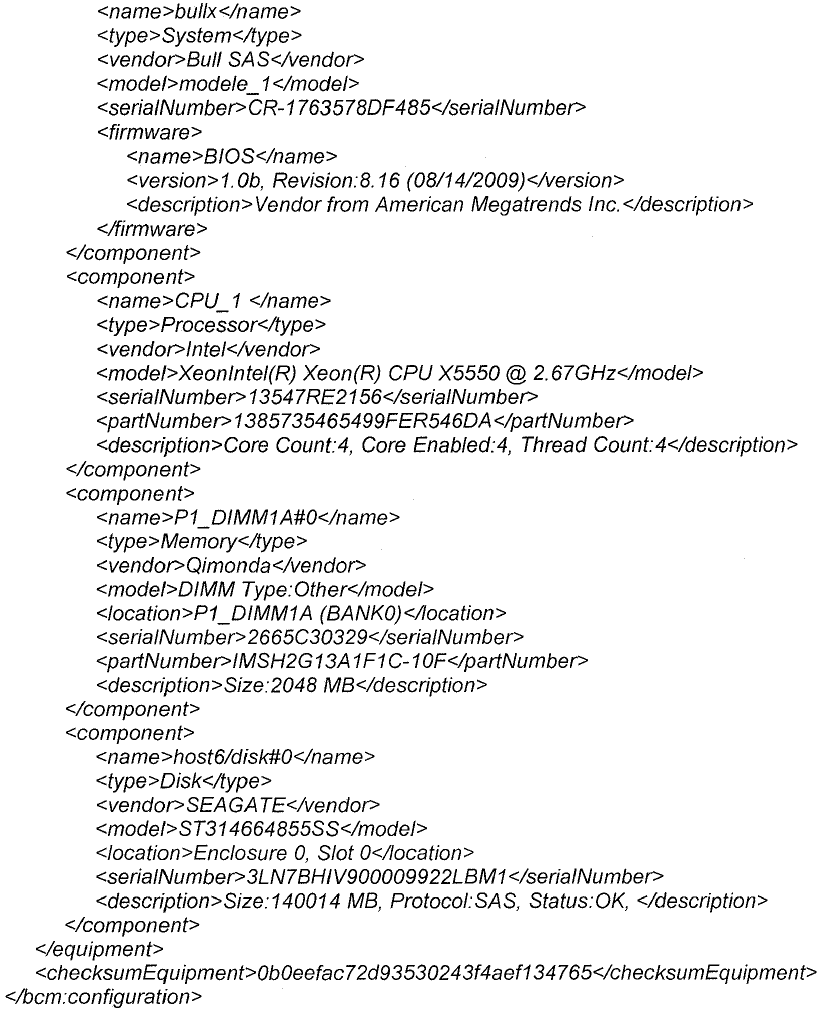

Extrait de fichier d'inventaire au format XML

## Revendications

1. Procédé pour identifier dynamiquement des composants matériels et/ou logiciels (204, 206, 208, 210) d'au moins un élément d'un cluster (300) comprenant une pluralité d'éléments (305, 310) et automatiser des opérations de gestion optimisée dudit cluster, ledit au moins un élément appartenant à ladite pluralité d'éléments et chaque élément de ladite pluralité d'éléments ayant des capacités de traitement de données, ce procédé comprenant les étapes suivantes,
- dans ledit au moins un élément (305), appelé au moins un premier élément, détection (425) d'un événement et, en réponse à ladite détection,
∘ identification (405, 410) d'au moins un composant matériel et/ou logiciel dudit au moins un premier élément,
∘ établissement (415) d'au moins un inventaire local, ledit au moins un inventaire local comprenant au moins une caractéristique d'au moins un composant matériel et/ou logiciel dudit au moins un premier élément ; et,
∘ transmission (420) dudit au moins un inventaire local à un élément de ladite pluralité d'éléments dudit cluster, distinct dudit au moins un premier élément, appelé second élément ;
- dans ledit second élément,
∘ réception (505) dudit au moins un inventaire ;
∘ établissement (510) d'un inventaire partiel ou global comprenant au moins ladite au moins une caractéristique dudit au moins un composant matériel et/ou logiciel dudit au moins un premier élément ; et,
∘ lancement d'une opération de gestion dudit cluster selon ledit inventaire partiel ou global ;
le procédé étant **caractérisé en ce que** ladite opération de gestion dudit cluster comprend une optimisation de répartition de charge entre plusieurs composants matériels d'éléments de ladite pluralité d'éléments.

2. Procédé selon la revendication 1 comprenant en outre, dans ledit second élément, une étape d'émission d'une requête d'inventaire, ladite étape de détection d'un événement comprenant une détection d'une réception de ladite requête.

3. Procédé selon la revendication 1 selon lequel ledit événement détecté est généré dans ledit au moins un premier élément.

4. Procédé selon l'une quelconque des revendications précédentes selon lequel ledit au moins un inventaire local comprenant un identifiant dudit au moins un composant matériel et/ou logiciel dudit au moins un premier élément.

5. Procédé selon l'une quelconque des revendications précédentes selon lequel lesdites étapes de réception dudit au moins un inventaire et d'établissement d'un inventaire partiel ou global sont répétées pour tous les éléments de ladite pluralité d'éléments d'un type prédéterminé.

6. Procédé selon l'une quelconque des revendications précédentes selon lequel au moins un inventaire local d'un élément dudit cluster n'ayant pas de capacité de traitement de données est établi par ledit second élément, au moins une donnée dudit inventaire local dudit élément n'ayant pas de capacité de traitement de données étant utilisée pour l'établissement dudit inventaire partiel ou global.

7. Procédé selon l'une quelconque des revendications précédentes selon lequel lesdits éléments sont des noeuds.

8. Programme d'ordinateur comprenant des instructions adaptées à la mise en oeuvre de chacune des étapes du procédé selon l'une quelconque des revendications précédentes lorsque ledit programme est exécuté sur un ordinateur.

## Patentansprüche

1. Verfahren zur dynamischen Identifikation der Material- und/oder Software-Komponenten (204, 206, 208, 210) mindestens eines Elements eines mehrere Elemente (305, 310) umfassenden Clusters (300), und zum Automatisieren von Vorgängen zur optimierten Steuerung des Clusters, wobei das mindestens eine Element zu den mehreren Elementen gehört und jedes Element der mehreren Elemente Datenverarbeitungskapazitäten hat, wobei das Verfahren die folgenden Schritte umfasst,
- in dem mindestens einen Element (305), das mindestens ein erstes Element genannt wird, Erfassen (425) eines Ereignisses, und im Ansprechen auf die Erfassung
∘ Identifizieren (405, 410) mindestens einer Material- und/oder Software-Komponente des mindestens einen ersten Elements,
∘ Erstellen (415) mindestens eines lokalen Bestandsverzeichnisses, wobei das mindestens eine lokale Bestandsverzeichnis mindestens ein Charakteristikum der mindestens einen Material- und/oder Software-Komponente des mindestens einen ersten Elements umfasst; und
∘ Übertragen (420) des mindestens einen lokalen Bestandsverzeichnisses auf ein Element der mehreren Elemente des Clusters, das sich von dem mindestens einen ersten Element unterscheidet und zweites Element genannt wird;
- in dem zweiten Element,
∘ Empfangen (505) des mindestens einen Bestandsverzeichnisses;
∘ Erstellen (510) eines partiellen oder globalen Bestandsverzeichnisses, das zumindest das mindestens eine Charakteristikum der mindestens einen Material- und/oder Software-Komponente des mindestens einen ersten Elements umfasst; und
∘ Starten eines Steuervorgangs des Clusters gemäß dem partiellen oder globalen Bestandsverzeichnis;
wobei das Verfahren **dadurch gekennzeichnet ist, dass** der Steuervorgang des Clusters eine Aufgabenverteilungsoptimierung zwischen mehreren Materialkomponenten von Elementen der mehreren Elemente umfasst.

2. Verfahren nach Anspruch 1, darüber hinaus umfassend, im zweiten Element, einen Aussendeschritt einer Bestandsverzeichnisanforderung, wobei der Erfassungsschritt eines Ereignisses eine Erfassung eines Empfangs der Anforderung umfasst.

3. Verfahren nach Anspruch 1, wobei das erfasste Ereignis in dem mindestens einen ersten Element generiert ist.

4. Verfahren nach einem der vorhergehenden Ansprüche, wobei das mindestens eine lokale Bestandsverzeichnis eine Kennung der mindestens einen Material- und/oder Software-Komponente des mindestens einen ersten Elements umfasst.

5. Verfahren nach einem der vorhergehenden Ansprüche, wobei die Schritte des Empfangs des mindestens einen Bestandsverzeichnisses und der Erstellung eines partiellen oder globalen Bestandsverzeichnisses für alle Elemente der mehreren Elemente eines vorbestimmten Typs wiederholt werden.

6. Verfahren nach einem der vorhergehenden Ansprüche, wobei mindestens ein lokales Bestandsverzeichnis eines Elements des Clusters, das keine Datenverarbeitungskapazität hat, durch das zweite Element erstellt wird, wobei mindestens ein Datenelement des lokalen Bestandsverzeichnisses des Elements, das keine Datenverarbeitungskapazität hat, zur Erstellung des partiellen oder globalen Bestandsverzeichnisses verwendet wird.

7. Verfahren nach einem der vorhergehenden Ansprüche, wobei die Elemente Knoten sind.

8. Computerprogramm, das Instruktionen umfasst, die zur Umsetzung jedes der Schritte des Verfahrens nach einem der vorhergehenden Ansprüche angepasst sind, wenn das Programm auf einem Computer ausgeführt wird.

## Claims

1. Method for dynamically identifying hardware and/or software components (204, 206, 208, 210) of at least one element of a cluster (300) comprising a plurality of elements (305, 310) and for automating optimised management operations for said cluster, said at least one element belonging to said plurality of elements and each element of said plurality of elements having data processing capabilities, said method comprising the following steps:
- within said at least one element (305), referred to as at least one first element, detecting (425) an event and in response to said detection:
∘ identifying (405, 410) at least one hardware and/or software component of said at least one first element,
∘ creating (415) at least one local inventory, said at least one local inventory comprising at least one feature of at least one hardware and/or software component of said at least one first element; and
∘ transmitting (420) said at least one local inventory to an element of said plurality of elements of said cluster other than said at least one first element, this element being referred to as the second element;
- within said second element:
∘ receiving (505) said at least one inventory;
∘ creating (510) a partial or complete inventory comprising at least said at least one feature of said at least one hardware and/or software component of said at least one first element; and
∘ initiating a management operation for said cluster in accordance with said partial or complete inventory;
the method being **characterised in that** said management operation for said cluster comprises an optimisation for distributing load among a plurality of hardware components of elements of said plurality of elements.

2. Method according to claim 1, further comprising, within said second element, a step of sending an inventory request, said step of detecting an event comprising detecting receipt of said request.

3. Method according to claim 1, wherein said detected event is generated within said at least one first element.

4. Method according to any of the preceding claims, wherein said at least one local inventory comprises an identifier of said at least one hardware and/or software component of said at least one first element.

5. Method according to any of the preceding claims, wherein said steps of receiving said at least one inventory and of creating a partial or complete inventory are repeated for each element of said plurality of elements of a predetermined type.

6. Method according to any of the preceding claims, wherein at least one local inventory of an element of said cluster without data processing capabilities is created by said second element, at least one piece of data from said local inventory of said element without data processing capabilities being used to create said partial or complete inventory.

7. Method according to any of the preceding claims, wherein said elements are nodes.

8. Computer program comprising instructions capable of implementing each step of the method according to any of the preceding claims when said program is executed on a computer.
